# EUROPEAN PATENT APPLICATION

(11) **EP 4 664 436 A1**
(43) Date of publication of application: **17.12.2025**
(21) Application number: 24181750.1
(22) Date of filing: 12.06.2024
(51) Int. Cl.: G08G 3/02

(54) **A METHOD FOR A COLLISION AVOIDANCE SYSTEM OF A HOST MARINE VESSEL, RELATED TO UPDATING VESSEL CLASSIFICATIONS AND NAVIGATIONAL STATUSES OF MARINE VESSELS**

(71) Applicant: ABB SCHWEIZ AG, 5400 Baden (CH)
(72) Inventor: TERVO, Kalevi, 00980 Helsinki (FI); LEHTOVAARA, Eero, 00980 Helsinki (FI)
(74) Representative: Kransell & Wennborg KB

(57) **Abstract**

The present invention generally relates to a method for a collision avoidance system of a host marine vessel, and to updating vessel classifications and navigational statuses of marine vessels.

## Description

### Field of the Invention

The present invention generally relates to a method for a collision avoidance system of a host marine vessel, and to updating vessel classifications and navigational statuses of marine vessels.

### Background

One central aspect in autonomous ship navigation and control is the Collision Detection and Collision Avoidance (CDCA) system. The CDCA system basically mimics the human navigator's risk assessment and decision-making procedure to enable safe and efficient operation of the vessel while performing actions to avoid grounding or collisions with static and dynamic obstacles.

The decision making regarding possible evasive maneuvers to avoid collisions depends on interpretation of the situation. In case the CDCA's interpretation of the situation is wrong, the human operator needs to take the ship under manual control in order to execute the situation safely.

There is this room for improvements with regards to the automatic operation of vessels.

### Summary

In view of the above-mentioned and other drawbacks of the prior art, it is an object of the present invention to provide a method that at least partly alleviates the drawbacks of prior art.

According to a first aspect of the invention, there is provided computer implemented method for a collision avoidance system of a host marine vessel, the method comprising: obtaining perception data from at least one sensor configured to detect surroundings of the host marine vessel, detecting at least one marine target in the perception data, classifying the at least one marine target to be one of several classes related to vessel type and navigational status, obtaining a present route plan comprising a set of planned positions for the host marine vessel, obtaining navigational chart data including positions of obstacles at least in the immediate surroundings of the host marine vessel, evaluating the at least one classified marine target, the present route plan and the navigational chart data to determine a second route plan for navigating past the obstacles and the classified at least one marine target, providing an output of the second route plan including an indication of the classification of the marine target, and/or the navigational status of the marine target, receiving, from a human-machine interface, at least one of an updated classification of the marine target, or an updated navigational status of the marine target, evaluating the at least one of the updated classification of the marine target or the updated navigational status of the marine target, along with the second route plan and the navigational chart data to determine a third route plan for navigating past the obstacles and the updated at least one marine target, providing an output of the third route plan including an indication of the updated classification of the marine target, or the updated navigational status of the marine target.

The present invention is at least partly based on the realization to allow a human operator to adjust the interpretation of a situation by manually adjusting the classification of the obstacles. The classification can include (but not limited to) the overall classification to "a ship" or "a special ship", navigational status ("restricted maneuverability", "normal", etc.), interpretation of the target with respect to COLREGs (e.g. stand-on, give-way, head-on, crossing, overtaking, passing from left, etc.). In addition, the human operator can adjust the target-specific parameters for the CDCA algorithm (may include the minimum passing distance in different directions, maximum passing speed, etc.)

This method starts by obtaining perception data from sensors, which allows the system to detect and classify marine targets based on their type and navigational status. Incorporating the current route plan and navigational chart data enables the system to evaluate potential obstacles and adjust the navigation path accordingly.

By classifying marine targets and considering their navigational statuses, the system tailors its response to different maritime scenarios, enhancing adaptability to various navigation rules and conditions. The output of the new route plan not only informs the vessel's navigational system but also serves as a transparent indication of how the vessel should navigate relative to other identified marine targets.

The integration of a human-machine interface allows for manual updates to the classification and status of marine targets. This feature is crucial for situations where sensor data might be ambiguous or insufficient, ensuring that human expertise can complement and correct machine-based interpretations. By re-evaluating updated classifications in conjunction with existing navigational plans, the system can formulate a further optimized route plan. This iterative process ensures that the navigation system is both responsive and adaptive to real-time human inputs and environmental changes, leading to safer and more reliable vessel operation.

The third route may be considered a deviation from the second route. That is, starting from the second route, and if classifications and statuses are updated, the third route is determined therefrom as a deviation from the second route.

In embodiments, the method may comprise: determining target-specific collision avoidance parameters for the classified at least one marine target and for the obstacles in the navigational chart data, determining the second route plan further based on the target-specific collision avoidance parameters, receiving, from a human-machine interface, updated target-specific collision avoidance parameters for at least one of the classified at least one marine target or the obstacles, and determining the third route plan further based on the updated target-specific collision avoidance parameters. A technical benefit may include the ability to tailor the collision avoidance actions more precisely by incorporating target-specific parameters, such as minimum passing distances or maximum allowable speeds. This can lead to a safer and more efficient navigation strategy that is adapted to the specific circumstances of each encountered marine target and obstacle.

In embodiments, the method may comprise: storing, in a memory, at least the updated classification of the marine target, or the updated navigational status of the marine target, or updated target-specific collision avoidance parameters for the classified at least one marine target and for the obstacles in the navigational chart data. A technical benefit may include the capacity for iterative improvement and customization of the collision avoidance system. By storing updated classifications and navigational statuses, the system can refine its understanding and predictions over time, enhancing the accuracy and reliability of the navigation decisions made by the preferably autonomous collision avoidance system.

In embodiments, the method may comprise: using the updated collision avoidance parameters and the updated classification to train a machine learning algorithm configured to generate at least the collision avoidance parameters, the classifications, and the navigations statuses. A technical benefit may include leveraging machine learning algorithms to continuously improve the system's decision-making capabilities. As the system accumulates more data on successful navigational strategies and updated parameters, it can learn to better predict optimal navigation paths, leading to enhanced safety and efficiency in operations. The updated parameters may be recorded along with the route plan, weather, etc. Then after collecting such data for some time, or on periodical basis, the model can be trained to learn the user preferences of the situation to be able to provide a solution closer to what a human operator desires, thereby requiring less input and interaction by the human operator with the system in future situations. That is, the method may include to learn to predict the target specific, and general, parameters based on the typical changes that the user does in different situations, for example by reinforcement learning.

In embodiments, the outputs of the second route plan and the third route plans are provided on a user interface. A technical benefit may include providing the crew with clear, actionable outputs regarding route planning adjustments. This visibility can assist human operators in understanding the system's decisions and in making informed choices, especially in complex navigational scenarios. The user interface may be a display.

In embodiments, the method may comprise, when the classifying of the at least one marine target results in an non-interpretable vessel type, or non-interpretable object, or non-interpretable navigational status, prompting the user interface for additional input to classify the at least one marine target. Objects may include navigational hazards, buoys, logs, fishnets, debris, marine mammals, rocks, etc. A technical benefit may include enhancing system responsiveness to non-standard situations by actively prompting human input when automatic classification fails. This ensures that the navigation system remains functional and effective even when encountering ambiguous or unclear data.

In embodiments, the steps of the method are continuously repeated as the host marine vessel travels. A technical benefit may include the ability to dynamically adapt to changing conditions and new information as the vessel moves. Continuous operation of the method ensures that the vessel's navigation system can promptly adjust to the evolving maritime environment, thereby maintaining safety and operational efficiency.

In embodiments, the classification of the marine target includes at least its ability to follow COLREG (convention on the international regulations for preventing collisions at sea). A technical benefit may include ensuring compliance with international maritime collision regulations (COLREGs) by classifying marine targets based on their ability to adhere to these rules. This can significantly reduce the risk of misunderstandings and collisions in international waters. The collision avoidance algorithm needs to consider the status of each target with respect to the host vessel, given the planned actions. COLREG also defines actions for situations where the other vessel is a special case, such as restricted maneuverability, sailing vessel (on sails), etc.

In embodiments, multiple marine targets may be considered. A technical benefit may include the capability to manage multiple targets simultaneously, enhancing the system's utility in busy or congested maritime areas. This enables the system to handle complex scenarios with multiple interacting vessels, each with their own navigational paths and intentions.

In embodiments, the host marine vessel may be a semi-autonomous or fully autonomous marine vessel.

In embodiments, the method may comprise executing the third route plan. Executing the third route plan based on refined inputs and updates ensures that the vessel follows the most current and optimized path for safety and efficiency.

In embodiments, the method may comprise: sending a request to a human-machine interface prompting a user to confirm execution of the third route plan, and executing the third route plan in response to the confirmation received on the human-machine interface.

There is further provided a control unit configured to execute the method.

There is further provided a marine vessel comprising the control unit.

According to a second aspect of the invention, there is provided a computer program product comprising program code for a collision avoidance system of a host marine vessel, the computer program product comprising: code for obtaining perception data from at least one sensor configured to detect surroundings of the host marine vessel, code for detecting at least one marine target in the perception data, code for classifying the at least one marine target to be one of several classes related to vessel type and navigational status, code for obtaining a present route plan comprising a set of planned positions for the host marine vessel, code for obtaining navigational chart data including positions of obstacles at least in the immediate surroundings of the host marine vessel, code for evaluating the at least one classified marine target, the present route plan and the navigational chart data to determine a second route plan for navigating past the obstacles and the classified at least one marine target, code for providing an output of the second route plan including an indication of the classification of the marine target, and/or the navigational status of the marine target, code for receiving, from a human-machine interface, at least one of an updated classification of the marine target, or an updated navigational status of the marine target, code for evaluating the at least one of the updated classification of the marine target or the updated navigational status of the marine target, along with the second route plan and the navigational chart data to determine a third route plan for navigating past the obstacles and the updated at least one marine target, code for providing an output of the third route plan including an indication of the updated classification of the marine target, or the updated navigational status of the marine target.

Further effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a host marine vessel according to an embodiment of the invention;
Fig. 2 is a flow-chart of method steps according to embodiments of the present invention;
Fig. 3 is a flow-chart of method steps according to embodiments of the present invention;
Fig. 4 is a flow-chart of method steps according to embodiments of the present invention;
Fig. 5 is a flow-chart of method steps according to embodiments of the present invention; and
Fig. 6 is an example situation that is interpreted by a control system of a host marine vessel according to an embodiment of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

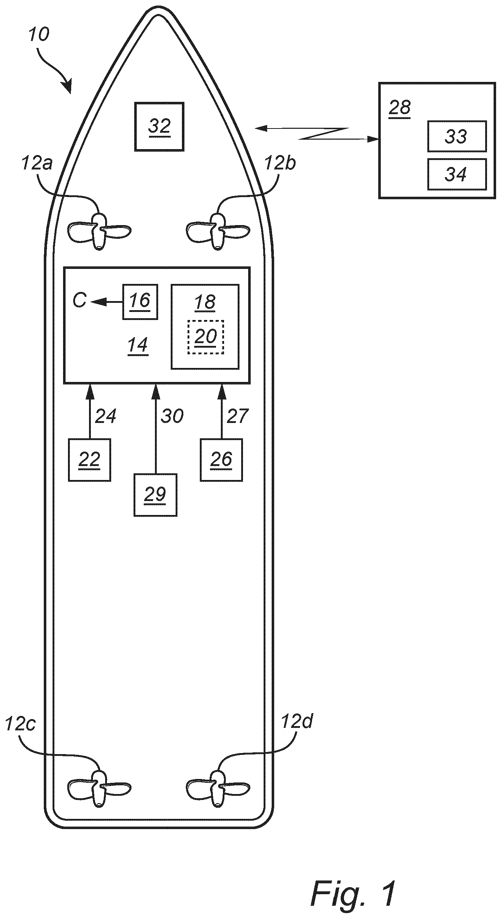

Fig. 1 schematically represents a top view of a marine vessel 10. The marine vessel 10 may for example be a ship, a boat, a barge, or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 could be rotatable in a horizontal plane (parallel with the drawing plane of Fig. 1) into different thrust directions or be mounted in a fixed direction. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters.

It is also envisaged that the vessel includes trochoidal, cycloidal, waterjet, etc. types of propulsion units. In case of fixed shaft line and rudder two different devices are typically included, the propeller and the rudder.

The vessel 10 further comprises a control system 14. The control system 14 of this example comprises a control unit 16 and a memory 18. The memory 18 may have a computer program stored 20 thereon for controlling the vessel or at least a collision avoidance system of the vessel.

The vessel 10 of further comprises one or more position sensor 22. The position sensor 22 is arranged to provide position data 24 to the control system 14. The position data 24 is indicative of a position of the vessel 10 in the horizontal plane. The position sensor 22 may for example be a global navigation satellite system (GNSS) device further providing position data 24 to the control system 14. A GNSS device can typically provide the heading of the vessel 10. In other example, the heading is provided by a heading sensor. Some vessels may include a gyrocompass or a satellite compass or a magnetic compass.

The vessel 10 of further comprises one or more sensors 26 configured to detect surroundings of the vessel 10 and provide perception data 27 thereof to the control system 14.

The marine vessel 10 may further comprise sensors 29 for measuring environmental conditions such as wind speed and direction, local sea current conditions, or wave characteristics. Environmental data 30 indicating the environmental conditions is provided to the control system 14 from environment sensors 29 on-board the marine vessel, or from remote sensors such as weather stations via the wireless transmission device 32. The environmental data may further include weather forecast of e.g., wind strength and direction, wave and sea current information such as strength and direction.

The control system 14 may be in communication with a control center 28 using the wireless transmission device 32. A human operator may provide inputs to the control system 14 from the remote control center 28. It is also envisaged that the control center is at the bridge of the vessel without remote control from off the vessel.

The host marine vessel 10 may be a semi-autonomous or fully autonomous marine vessel. In other embodiments, the vessel is a conventional vessel where the collision avoidance system is used for advisory information.

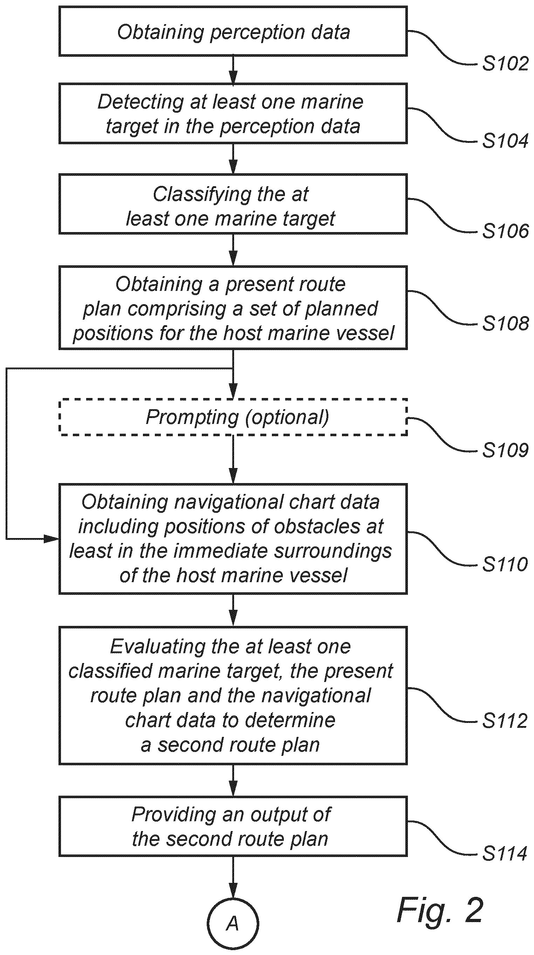

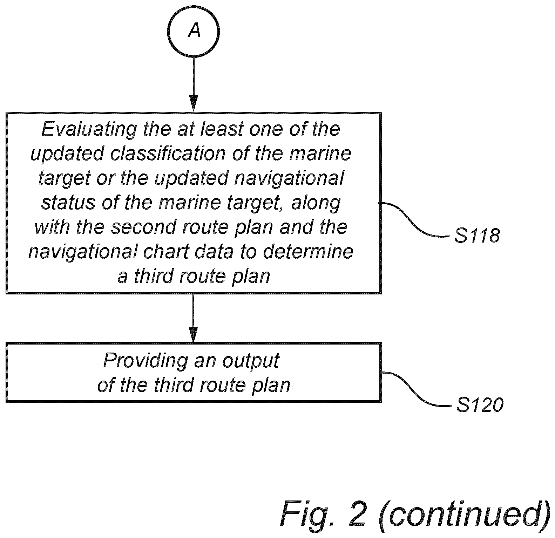

Fig. 2 is a flow-chart of method steps according to embodiments of the invention.

The method steps are for a collision avoidance system of a host marine vessel and involves navigational status and classification of vessels.

In step S102, obtaining perception data from at least one sensor 29 configured to detect surroundings of the host marine vessel. Such sensors 29 may be for example radar data,, AIS (or equivalent transponder system), camera, infrared camera (SWIR, LWIR, etc.), laser-based sensors such as LiDAR, etc.

In step S104, detecting at least one marine target in the perception data 30. Preferably, multiple marine targets may be detected and considered.

In step S106, classifying the at least one marine target to be one of several classes related to vessel type and navigational status. The classification refers to the status of each target with respect to the host marine vessel. For example, is the marine target a normal ship or a so-called special ship. A "normal ship" is typically a ship that is a power-driven vessel and is not constrained by anything related to its capability to follow COLREGs (convention on the international regulations for preventing collisions at sea). Normal ships follow the rules regarding the main encountering situations in head-on, crossing and overtaking regarding the actions of a stand-on vessel and give-way vessel. A "special ship" will not necessarily follow the normal rules due to various reasons, such as, work operations (e.g. fishing, pipe laying, towing, etc.), limited maneuverability (anchored, blackout, etc.), other limitations (e.g. draft limitations, sailing boat), etc.

Typically, detection and tracking of objects are performed. Tracking may be considered postprocessing of the detection data to isolate objects from the data and track their movement over time. This enables to estimate and predict their motions in the future and provide this as input for the collision avoidance system. It is envisaged to use so called track-before-detection.

In case of having several sources of detections and tracks available, fusion of data is advantageously performed. This may be performed as "early fusion" on detection level or "late fusion" on track level. It is preferred to used track fusion (late fusion).

The detection, tracking and fusion based on point cloud data (such as radar, lidar, etc.) or visual imaging (camera, thermal camera, etc.) are standard methods known to the skilled person and will not be described in detail herein.

In optional step S109, when the classifying of the at least one marine target results in a non-interpretable vessel type, or non-interpretable object, or non-interpretable navigational status, prompting the user interface for additional input to classify the at least one marine target. A human operator may add user-specified targets which are not detected, add user-specified no-go zones, add user-specified navigational hazards.

In step S108, obtaining a present route plan comprising a set of planned positions for the host marine vessel. The planned positions may for example be GPS coordinates that describe the present route plan. The present route plan may be obtained from a memory of the vessel or from a remote center.

In step S110, obtaining navigational chart data including positions of obstacles at least in the immediate surroundings of the host marine vessel 10. The navigational chart data, e.g., a "marine map" may be retrieved from a memory or from the remote center.

In step S112, evaluating the at least one classified marine target, the present route plan and the navigational chart data to determine a second route plan for navigating past the obstacles and the classified at least one marine target. In other words, based on the classification and the navigational chart data, the present route is updated with a second route past the obstacles.

In step S114 providing an output of the second route plan including an indication of the classification of the marine target, and/or the navigational status of the marine target. The output may be provided on a user interface 33 in the remote operation center 28. The user interface may be a display 33.

In step S116, receiving, from a human-machine interface 34, at least one of an updated classification of the marine target, or an updated navigational status of the marine target. That is, a human operator can review and update the classification and/or the navigational status in case the classification is inaccurate.

In step S118, evaluating the at least one of the updated classification of the marine target or the updated navigational status of the marine target, along with the second route plan and the navigational chart data to determine a third route plan for navigating past the obstacles and the updated at least one marine target. Thus, once updated classification of the marine target, or an updated navigational status of the marine target is received, the route is reevaluated and a third route plan is determined, taking into account the human operator input.

In step S120, providing an output of the third route plan including an indication of the updated classification of the marine target, or the updated navigational status of the marine target. The output of the third route plan may be shown on the display 33. Preferably, the third route plan is executed by the control system 14. In some implementations, a request is first sent to a human-machine interface 34 prompting a user to confirm execution of the third route plan. The thrid route plate is only executed once the third route plan is confirmed via the human-machine interface 34.

When determining a route, some general collision avoidance parameters are considered. A non-exhaustive list of general collision avoidance parameters is:
- Narrow channel or fairway.
- Traffic separation scheme.
- Open sea.
- Keep right side of fairway.
- Allow to enter left side of the fairway in narrow channel.
- Maximum safe speed.
- Minimum speed.
- Minimum rate of turn.
- Maximum rate of turn.
- Maximum acceleration.
- Maximum deceleration.
- Reliable perception range.
- Minimum Time to closes point of approach (TCPA).
- Minimum Distance to the closest point of approach (DCPA).
- Minimum Closest point of approach (CPA).
- Minimum radius of turn (or course change) for action.
- Minimum distance / time before encountering to start action.
- Minimum passing distance.

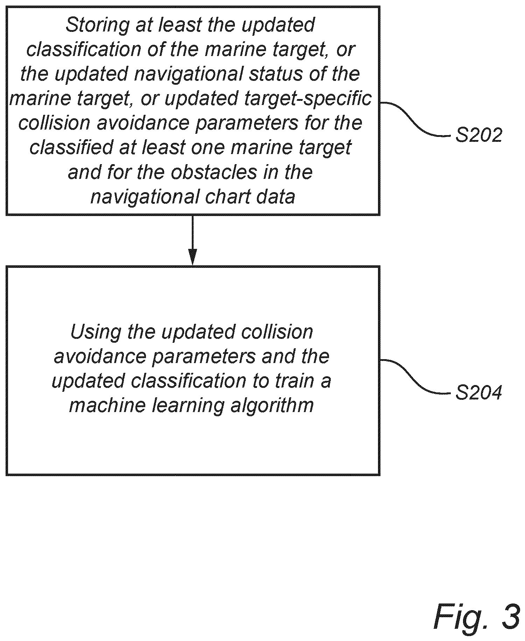

Fig. 3 is a flow-chart of additional method steps according to embodiments of the invention.

In step S202, storing, in a memory 18, at least the updated classification of the marine target, or the updated navigational status of the marine target, or updated target-specific collision avoidance parameters for the classified at least one marine target and for the obstacles in the navigational chart data. Storing the updated classifications, navigational statuses and parameters, enables to use them, in step S204 to train a machine learning algorithm configured to generate at least the collision avoidance parameters, the classifications, and the navigations statuses. The machine learning algorithm may be reinforcement learning based algorithm.

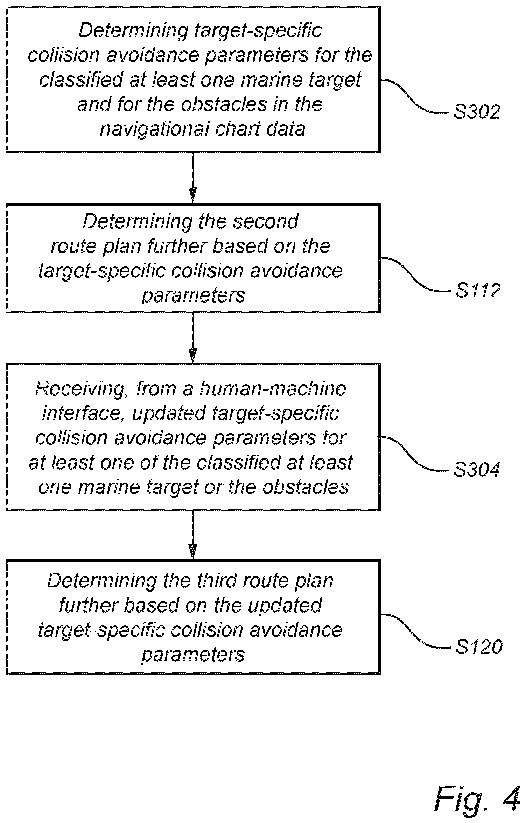

Fig. 4 is a flow-chart of additional method steps according to embodiments of the invention.

In step S302, determining target-specific collision avoidance parameters for the classified at least one marine target and for the obstacles in the navigational chart data.

Target-specific collision avoidance parameters include any parameter that affects a risk of collision. For example, a non-exhaustive list is:
- Safe passing speed.
- Threshold for starting action if give-way vessel does not act.
- Type of action in case give-way vessel does not act.
- Agreed encountering point (drag currently predicted encountering point for).
- Agreed passing side.
- Minimum radius of turn (or course change) for action.
- Minimum distance / time before encountering to start action.
- Minimum passing distance.
- Minimum Time to closes point of approach (TCPA).
- Minimum Distance to the closest point of approach (DCPA).
- Minimum Closest point of approach (CPA).
- Minimum radius of turn (or course change) for action.
- Minimum distance / time before encountering to start action.
- Predicted target route / speed / course (this is something that the user might have information over radio and e.g. user would know that it turns right soon).

Step S112 described above now further includes determining the second route plan further based on the target-specific collision avoidance parameters,

Ste S304 includes receiving, from a human-machine interface, updated target-specific collision avoidance parameters for at least one of the classified at least one marine target or the obstacles.

Step S112 described above now further includes determining the third route plan further based on the updated target-specific collision avoidance parameters.

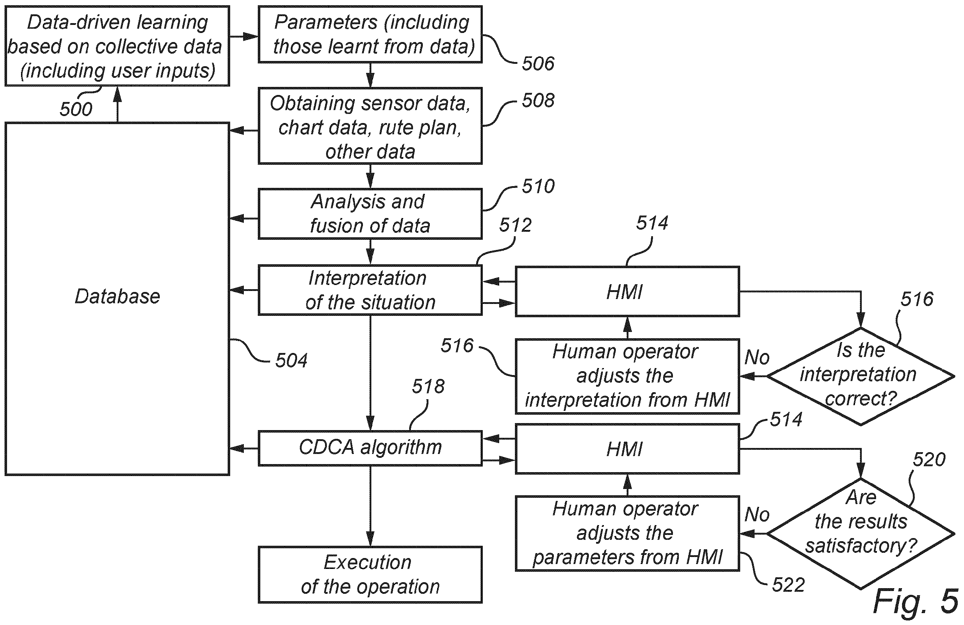

Fig. 5 is an overview functional flow-chart of method steps of embodiments of the invention. The method is in this embodiment based on a data-driven learning algorithm 500 that is based on data collected during vessel operation and stored in a database 502. The data-driven modelling is adapted to learn to improve the parameters based on how the human operator will adjust the parameters, navigational statuses, etc. in different situations. However, the method could be implemented without the data-driven modelling.

The control system receives parameters 506 from the data driven learning algorithm 502, data 508 such as perception sensor data 30, GPS data 24, environmental data 27, navigational chart data, etc.

The data 508 and parameters 506 are fused 510 such that an interpretation of the situation 512 can be determined. The interpretation 512 includes classifications and navigation status of detected objects, and preferably a suggested route to avoid obstacles.

The interpretation is provided to a human-machine interface 514 where a human operation may check that the interpretation is correct 516, and, if necessary, adjust the interpretation using the human-machine interface.

Adjusting the interpretation of the situation, for each detected target, involves adjusting one or more of the following: classification to "a ship" or "a special ship", classification to a "give-way" or "stand-on" target, classification to "head-on", "crossing" or "overtaking" target, classification to "pass from left" target, etc.

Adjusting the interpretation of the navigational status of the target may include to parameters related to, restricted maneuverability, constraints by draft, under work operation status, etc. The term "vessel constrained by her draft" means a power-driven vessel which, because of her draft in relation to the available depth and width of navigable water is severely restricted in her ability to deviate from the course she is following.

The collision avoidance algorithm 518 receives the updated interpretation and determines parameters with respect to each obstacle, for example, how close the system allows to pass the obstacle.

The output parameters of the collision avoidance algorithm 518 are provided to the human machine interface 514 such that the human operator may check 520 the outcome of the collision avoidance algorithm 518. The human operator may adjust 522 the parameters, e.g., target specific collision parameters or general collision parameters, and feed back the updated parameters to the collision avoidance algorithm 518.

The collision avoidance algorithm 518 re-evaluates and provides the updated operation plan for execution 524.

Advantageously, in each iteration, the parameters from the collision avoidance algorithm 518 may be stored in the database 504, the interpretation of the situation 512 may be stored in the database 504, the data 508 may be stored in the database 504, and the analysis and fusion 510 of the data may be stored in the database 504, to train the data-driven learning algorithm 500.

In another example, assuming radar and AIS are used for detection the surroundings of the vessel. The first route exists or is calculated prior to initiating the method. The first route may be to just maintain the course and speed of the vessel.

The second route is calculated as a avoidance route to avoid collision by clustering radar detections are clustered to identify objects which belong together. The radar detections are tracked over time to estimate the motions of moving objects. Next, radar-based targets are fused with AIS-based target. The own route of the host vessel and the tracks of other vessels are simulated forward with respect to also static objects and nautical charts.

Risk assessment is performed based on the route and decision-making (interpretation) of how to treat each vessel, static objects and map based on the information from those and also based on how they are encountered.

The second route is based on the interpretation so that the host vessel follow COLREGs according to the interpretation of the vessel types and navigational statuses.

Calculating the 3rd route as an updated avoidance route based on user input. A user can check the interpretation from the user interface 34. The user can adjust the interpretation. A new route is calculated based on the user changed parameters. The system can execute the third route automatically, and the third route can be shown on the user interface as advisory, or the system can require user-confirmation before executing the avoidance route automatically.

The situation and the user inputs are recorded as data and based on data recorded over longer time, Machine Learning can be trained and used to predict the collision avoidance parameters, navigational statuses, etc. Next time a calculation of an avoidance route / deviation from the nominal route (1st route) is needed, the machine learning model 500 can be used to suggest new parameters which the user can choose to use.

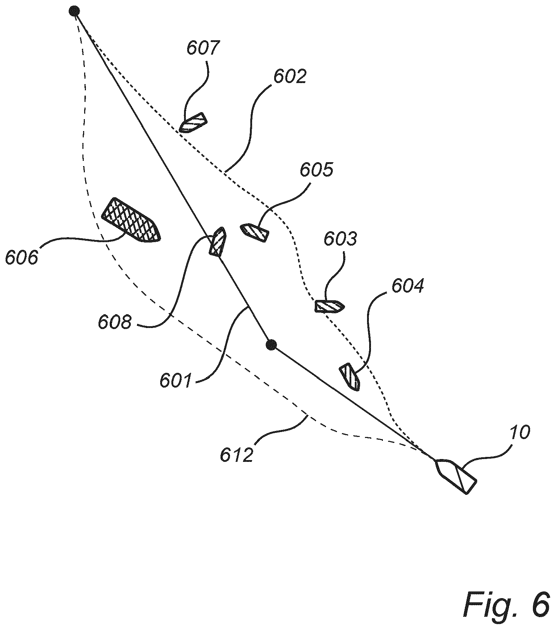

Fig. 6 illustrates an example situation that is being interpreted by the control system 14 of the host marine vessel 10 being on a planned route 601. The planned route is determined before the vessel has left the departure port or maybe updated during the trip. The planned route 601 is determined based on what is known in advance before reaching a specific location and is determined based on e.g., weather forecasts, nautical charts, etc. The nominal route plan 601 is assumed to be already existing or calculated prior to departure. If there is no pre-planned route plan, then it is assumed that the present speed and course is to be maintained as the initial first route.

In fig 6, first trajectory 602 is a result of considering all targets 604-608 as "normal ships". In that case, the normal COLREGs encountering situations would be valid. For example, the host vessel 10 is estimating that it is approaching vessel 604 as head-on and therefore taking a starboard turn. The secondary vessel 603 may be predicted to get away before the host vessel 10 reaches it, thereby the host vessel pass vessel 603 from the stern side and consider the passing safe. The action for vessels 605 and 608 may be that 605 is not moving and therefore the host vessel 10 pass it with slight turn to starboard and vessel 608 would be a give-way vessel, because the host 10 approach from the right.

The relationship with the planned trajectory of different targets 604-608 will totally change if the target 604 is considered as "a special ship". In that case, that is, if the user provides the input that changes the classification of the target 604 from "normal ship" to "special ship", the second trajectory 612 is generated. That is, the user providing input may allow the host marine vessel 10 to pass target 604 with a left turn, which will completely change the interpretation of the statuses of different targets 604-608 with respect to the planned trajectory 602. Now, in addition to target 604, only target 605 and target 607 are relevant. Both are considered as "crossing" targets, where the host vessel 10 is potentially a give-way vessel. Unlike in the first case, (trajectory 602) where target 605 is considered as "Overtaking" target 605.

Note the cascading effect and how the manual change in interpretation of one target, e.g. target 604 may lead to completely different end-result where the importance of different targets will change. The illustration could be extended further to describe the effect of the proposed solution where, for example, the user would change the distance the system considers when passing the fishing vessels (orange) from the stern. If the fishing vessels would be trawlers, you typically need to have long enough distance to pass from the stern in order not to mess with the trawls. That would also change the first trajectory. The drawing also does not consider the effect of changing speed during the maneuvers and how that affects in the predicted encountering with different targets.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer implemented method for a collision avoidance system of a host marine vessel, the method comprising:
obtaining (S102) perception data from at least one sensor configured to detect surroundings of the host marine vessel,
detecting (S104) at least one marine target in the perception data,
classifying (S106) the at least one marine target to be one of several classes related to vessel type and navigational status,
obtaining (S108) a present route plan comprising a set of planned positions for the host marine vessel,
obtaining (S110) navigational chart data including positions of obstacles at least in the immediate surroundings of the host marine vessel,
evaluating (S112) the at least one classified marine target, the present route plan and the navigational chart data to determine a second route plan for navigating past the obstacles and the classified at least one marine target,
providing (S114) an output of the second route plan including an indication of the classification of the marine target, and/or the navigational status of the marine target,
receiving (S116), from a human-machine interface, at least one of an updated classification of the marine target, or an updated navigational status of the marine target,
evaluating (S118) the at least one of the updated classification of the marine target or the updated navigational status of the marine target, along with the second route plan and the navigational chart data to determine a third route plan for navigating past the obstacles and the updated at least one marine target,
providing (S120) an output of the third route plan including an indication of the updated classification of the marine target, or the updated navigational status of the marine target.

2. The method of claim 1, comprising:
determining target-specific collision avoidance parameters for the classified at least one marine target and for the obstacles in the navigational chart data,
determining the second route plan further based on the target-specific collision avoidance parameters,
receiving, from a human-machine interface, updated target-specific collision avoidance parameters for at least one of the classified at least one marine target or the obstacles, and
determining the third route plan further based on the updated target-specific collision avoidance parameters.

3. The method of any one of claims 1 and 2, comprising:
storing, in a memory, at least the updated classification of the marine target, or the updated navigational status of the marine target, or updated target-specific collision avoidance parameters for the classified at least one marine target and for the obstacles in the navigational chart data.

4. The method of claim 3, comprising:
using the updated collision avoidance parameters and the updated classification to train a machine learning algorithm configured to generate at least the collision avoidance parameters, the classifications, and the navigations statuses.

5. The method according to any one of the preceding claims, wherein the outputs of the second route plan and the third route plans are provided on a user interface.

6. The method according to claim 5, the user interface being a display.

7. The method according to any one of the preceding claims, wherein when the classifying of the at least one marine target results in an non-interpretable vessel type, or non-interpretable object, or non-interpretable navigational status, prompting the user interface for additional input to classify the at least one marine target.

8. The method according to any one of the preceding claims, comprising:
repeating the steps of the method continuously as the host marine vessel travels.

9. The method according to any one of the preceding claims, wherein the classification of the marine target includes at least its ability to follow COLREG (convention on the international regulations for preventing collisions at sea).

10. The method according to any one of the preceding claims, wherein multiple marine targets are considered.

11. The method according to any one of the preceding claims, the host marine vessel being a semi-autonomous or fully autonomous marine vessel.

12. The method according to any one of the preceding claims, comprising:
sending a request to a human-machine interface prompting a user to confirm execution of the third route plan, and
executing the third route plan in response to the confirmation received on the human-machine interface.

13. A control unit configured to execute the method of any one of the preceding claims.

14. A marine vessel (10) comprising the control unit of claim 13.

15. A computer program product comprising program code for a collision avoidance system of a host marine vessel, the computer program product comprising:
code for obtaining perception data from at least one sensor configured to detect surroundings of the host marine vessel,
code for detecting at least one marine target in the perception data,
code for classifying the at least one marine target to be one of several classes related to vessel type and navigational status,
code for obtaining a present route plan comprising a set of planned positions for the host marine vessel,
code for obtaining navigational chart data including positions of obstacles at least in the immediate surroundings of the host marine vessel,
code for evaluating the at least one classified marine target, the present route plan and the navigational chart data to determine a second route plan for navigating past the obstacles and the classified at least one marine target,
code for providing an output of the second route plan including an indication of the classification of the marine target, and/or the navigational status of the marine target,
code for receiving, from a human-machine interface, at least one of an updated classification of the marine target, or an updated navigational status of the marine target,
code for evaluating the at least one of the updated classification of the marine target or the updated navigational status of the marine target, along with the second route plan and the navigational chart data to determine a third route plan for navigating past the obstacles and the updated at least one marine target,
code for providing an output of the third route plan including an indication of the updated classification of the marine target, or the updated navigational status of the marine target.
